# EUROPEAN PATENT SPECIFICATION

(11) **EP 3 809 174 B1**
(45) Date of publication and mention of the grant of the patent: **08.05.2024**
(21) Application number: 19831378.5
(22) Date of filing: 01.07.2019
(51) Int. Cl.: G02B 6/255, G02B 6/38, G02B 6/44

(54) **SPLICE HOLDER AND SPLICE TRAY THEREWITH**
SCHMELZSPLEISSHALTERUNG UND ABLAGE DAMIT
DISPOSITIF DE RETENUE POUR ÉPISSURE SOUDÉE ET CASSETTE LE COMPRENANT

(30) Priority: 02.07.2018 CN 201810709990
(43) Date of publication of application: 21.04.2021
(73) Proprietor: Huawei Technologies Co., Ltd., Longgang Shenzhen, Guangdong 518129 (CN)
(72) Inventor: SHU, Siwen, Shenzhen, Guangdong 518129 (CN); HE, Long, Shenzhen, Guangdong 518129 (CN)
(74) Representative: Gill Jennings & Every LLP
(86) International application number: PCT/CN2019/094194
(87) International publication number: WO 2020/007259

(56) References cited:
- WO-A1-2007/129953
- CN-U- 204 422 815
- CN-U- 205 353 398
- CN-U- 207 198 381
- CN-U- 207 232 473
- CN-Y- 2 570 813
- CN-Y- 201 188 134
- US-A1- 2010 183 274
- US-A1- 2010 303 430
- US-A1- 2010 316 348

## Description

### TECHNICAL FIELD

Implementations of this application relate to the field of mechanical technologies, and in particular, to a splice holder and a splice tray.

### BACKGROUND

In the optical distribution network (optical distribution network, ODN) field, a splice protection sleeve and a securing structure such as a splice holder are usually used to connect optical fibers, protect a splice point and ensure a connection of an optical path and a normal optical loss. Due to space limitation, most splice holders use a double-layer splice protection sleeve securing structure. When the splice holder is fully loaded with splice protection sleeves, a lower-layer splice protection sleeve makes cantilevers of the splice holder open wider. Consequently, an upper-layer splice protection sleeve is not secure enough and easily comes away, causing an optical fiber to break. It can be learned that, the current double-layer splice protection sleeve securing structure has poor securing performance.

US2010303430 relates to splice holder device. Specifically, the document discloses a splice tray to hold a splice holder device configured hold both a mechanical splice and a fusion splice, each having a different shape. The splice holder device includes a first splice channel and second splice channel. Each splice channel includes one or more flexible arms spaced along a length of the splice channel to provide a resistance against a housing of the splice. Also, each channel includes one or more base supports and one or more upper stops. The flexible arms extend from a channel wall at an angle to provide force components in orthogonal directions.

CN204422815 relates to improved structure of optical fiber welding disc.

### SUMMARY

Implementations of this application provide a splice holder and a splice tray, to resolve a prior-art problem that a splice protection sleeve is not firmly secured.

The invention has been defined in the independent claim 1. Further specific technical features have been defined in the dependent claims.

According to a first aspect, an implementation of this application provides a splice holder as defined in claim 1.

In this implementation of this application, the first flexible arm and the stopper that can elastically press against the splice protection sleeves are disposed on the retaining plate. When the splice protection sleeves are installed in the accommodating area, the first flexible arm is elastically deformed and secures the splice protection sleeves in the accommodating area under the action of the elastic force generated after elastic deformation of the first flexible arm, and the stopper is configured to restrict movement of the splice protection sleeves in the direction away from the substrate. Then, the splice protection sleeves can be firmly secured in the accommodating area. Therefore, the splice protection sleeves do not move in the accommodating area. This avoids a risk that optical fibers in the splice protection sleeve break due to movement of the splice protection sleeves.

In the invention, at least one second flexible arm is further disposed on the at least one secured plate that forms the accommodating area, the second flexible arm bends towards the accommodating area when in a natural state, there is a gap between the second flexible arm and the substrate, and when the second flexible arm is in the natural state, a bottom surface that is of the second flexible arm and that faces the substrate is configured to restrict movement of the first splice protection sleeve in the direction away from the substrate. For example, when fully loaded, one accommodating area may accommodate two splice protection sleeves that are sequentially arranged vertically such that the second splice protection sleeve is atop the first splice protection sleeve. Alternatively, when not fully loaded, the accommodating area may accommodate only one splice protection sleeve. In this case, the second flexible arm is not elastically deformed, but is in the natural state, and the bottom surface of the second flexible arm restricts upward movement of the splice protection sleeve. Meanwhile, the first flexible arm exerts an elastic force on a side surface of the splice protection sleeve. The first flexible arm and the second flexible arm work together to secure the splice protection sleeve in the accommodating area. It can be understood that, when fully loaded, one accommodating area may alternatively accommodate three or more splice protection sleeves; when not fully loaded, the accommodating area may alternatively accommodate at least two splice protection sleeves below the second flexible arm.

In some possible designs, in a direction perpendicular to the substrate, a width of the gap is greater than or equal to a diameter of the splice protection sleeve. Therefore, when a splice protection sleeve is further installed in the accommodating area after a splice protection sleeve has been installed below the second flexible arm, no friction force is generated between the splice protection sleeve that has been installed and the second flexible arm during elastic deformation of the second flexible arm. This facilitates movement of the second flexible arm during elastic deformation of the second flexible arm, and facilitates installation of the splice protection sleeve.

In the invention, one accommodating area is configured to secure at least two splice protection sleeves, and the at least two splice protection sleeves are sequentially arranged vertically in the direction perpendicular to the substrate; and when the at least two splice protection sleeves are installed in the accommodating area, the first flexible arm secures each of the splice protection sleeves in the accommodating area through elastic deformation. In an example, the second flexible arm can secure all splice protection sleeves in the accommodating area.

In some possible designs, two first flexible arms are correspondingly disposed in one accommodating area, and in an extension direction of the splice protection sleeve, the second flexible arm is disposed between the two first flexible arms. Therefore, the splice protection sleeve can be secured more firmly, regardless of whether the accommodating area is fully loaded or not fully loaded.

In some possible designs, the first flexible arm restricts the at least two splice protection sleeves to the accommodating area through elastic deformation.

In some possible designs, a bottom surface that is of the stopper and that faces the substrate presses against the splice protection sleeve, to restrict movement of the splice protection sleeve in a direction away from the substrate.

In some possible designs, a first guide surface is disposed on the first flexible arm, and the first guide surface is configured to guide the splice protection sleeve to be installed in the accommodating area. The first guide surface may be flat or curved. Therefore, the first guide surface can guide the splice protection sleeve to be installed in the accommodating area. This facilitates installation.

In some possible designs, a second guide surface is disposed on the second flexible arm, and the second guide surface is configured to guide the splice protection sleeve to be installed in the accommodating area. The second guide surface may be flat or curved. Therefore, the second guide surface can guide the splice protection sleeve to be installed in the accommodating area. This facilitates installation.

In some possible designs, a third guide surface is disposed on the stopper, and the third guide surface is configured to guide the splice protection sleeve to be installed in the accommodating area. The third guide surface may be flat or curved. Therefore, the third guide surface can guide the splice protection sleeve to be installed in the accommodating area. This facilitates installation.

In some possible designs, a fourth guide surface is further disposed on the top end that is of the retaining plate and that is away from the substrate, and the fourth guide surface may be flat or curved. Therefore, the fourth guide surface can guide the splice protection sleeve to be installed in the accommodating area. This facilitates installation.

In some possible designs, the first flexible arm and/or the second flexible arm have/has a bending structure. Therefore, an elastic force can be increased, and the splice protection sleeve can be better secured.

According to a second aspect, an implementation of this application provides a splice tray, where the splice tray includes the splice holder according to the first aspect or any possible designs of the first aspect.

### BRIEF DESCRIPTION OF DRAWINGS

FIG. 1 is a schematic structural diagram of a splice holder in an existing mechanism;
FIG. 2 is a schematic structural diagram of a splice holder according to an implementation of this application;
FIG. 3 is a schematic structural diagram of a splice holder according to an implementation of this application;
FIG. 4 is a schematic structural diagram of a splice holder according to an implementation of this application;
FIG. 5 is a schematic structural diagram of a splice holder in which splice protection sleeves are placed according to an implementation of this application;
FIG. 6 is a schematic structural diagram of a splice holder according to an implementation of this application;
FIG. 7 is a schematic structural diagram of a splice holder according to an implementation of this application;
FIG. 8 is a schematic structural diagram of a splice holder according to an implementation of this application;
FIG. 9 is a schematic structural diagram of a splice holder according to an implementation of this application; and
FIG. 10 is a schematic structural diagram of a splice tray in which a splice holder is installed according to an implementation of this application.

In the accompanying drawings, reference numerals represent the following:
1: Splice holder; 2: Splice protection sleeve; 11: Substrate; 12: Retaining plate; 13: Accommodating area; 14: Gap; 15: Wedge structure; 121: First flexible arm; 122: Stopper; 123: Second flexible arm; 1211: First guide surface; 1231: Second guide surface; 1221: Third guide surface.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that the implementations described herein can be implemented in orders other than the order illustrated or described herein. In addition, the terms "include" and any other variant thereof are intended to cover the non-exclusive inclusion, for example, a product or device that includes a list of structures is not necessarily limited to those expressly listed structures, but may include other structures that are not expressly listed or are inherent to such a product or device. Division into the modules in this application is merely logical division.

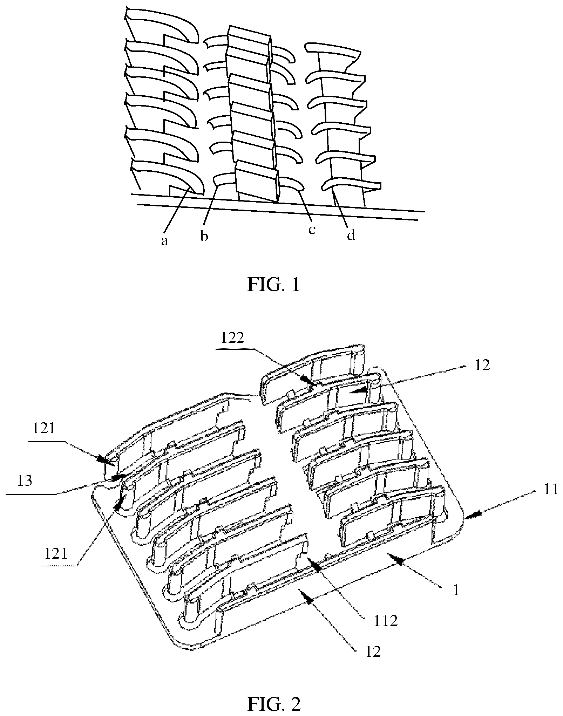

In a mechanism, a wall on a splice holder is divided into two layers: an upper layer and a lower layer. Protection points (for example, points a and d shown in FIG. 1) are disposed on walls on two sides of the splice holder, and protection points (for example, points b and c shown in FIG. 1) are disposed on a wall in the middle of the splice holder. However, the protection points a and d on the walls on the two sides of the splice holder secure only an upper-layer splice protection sleeve, and the protection points b and c on the wall in the middle of the splice holder secure only a lower-layer splice protection sleeve. When the splice holder that is fully loaded with splice protection sleeves is in transit or vibration, upper-layer splice protection sleeves in the splice holder easily come away due to vibration.

The mechanism mainly has the following technical defects:
1. In transit or other vibration, the upper-layer splice protection sleeves are at risk of coming away due to vibration.
2. It is difficult to place a splice protection sleeve in a height direction of the wall, and it is difficult to perform subsequent maintenance operations such as removing and replacing a splice protection sleeve.
3. As shown in FIG. 1, the wall on the splice holder is divided into the two layers: the upper layer and the lower layer. The two protection points a and d protect only the upper-layer splice protection sleeve. The two protection points b and c protect only the lower-layer splice protection sleeve. The two protection points b and c are too close to each other. Consequently, the entire splice protection sleeve is not firmly secured. When a relatively long splice protection sleeve is installed, the splice holder has poor stability.

To resolve the foregoing technical defects, the implementations of this application provide a splice holder and a splice tray, to implement connection of optical fibers. The implementations of this application mainly provide the following technical solutions.

For the technical defects 1 and 3, the implementations of this application use a solution. In this solution, a flexible arm is disposed on a retaining plate of a splice holder, to restrict axial movement of a splice protection sleeve. For example, the flexible arm may be in a bending structure. In addition, a stopper is disposed on one end of the retaining plate in a height direction, to restrict movement of the splice protection sleeve in a direction away from a substrate. For the technical defect 2, in the implementations of this application, a guide surface is disposed on the flexible arm on the retaining plate of the splice holder. The retaining plate in the implementations of this application may be referred to as a wall, a flexible wall, a wall, or the like. This is not specifically distinguished or limited in this application.

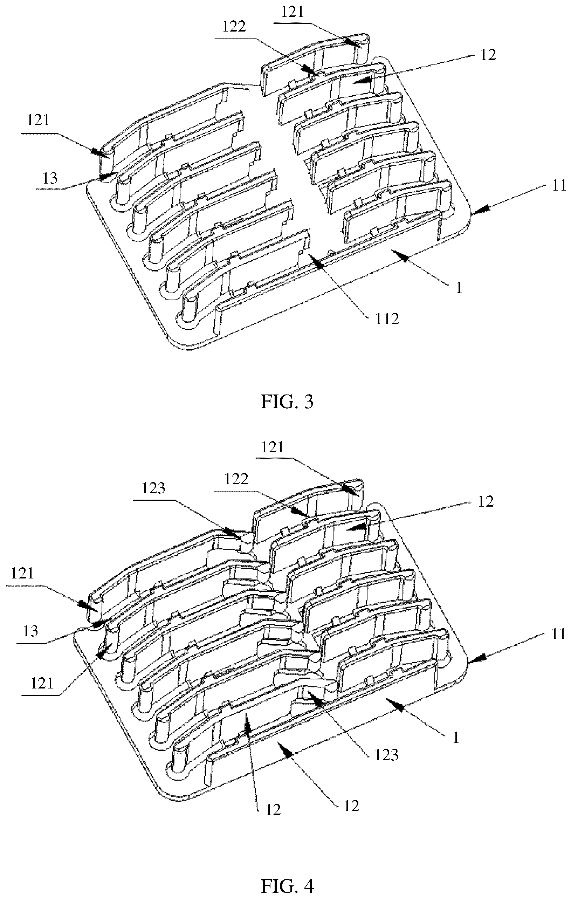

The splice holder described with reference to FIGS. 2 and 3 is not claimed as such.

The following describes a splice holder 1 in the implementations of this application. FIG. 2 is schematic structural diagram of a splice holder 1. The splice holder 1 includes a substrate 11 and at least two retaining plates 12 disposed on the substrate 11. There are at least two retaining plates 12 disposed opposite to each other in the at least two retaining plates 12, to form at least one accommodating area 13 configured to accommodate a splice protection sleeve 2.

For any accommodating area 13, at least one first flexible arm 121 is disposed on at least one secured plate 12 that forms the accommodating area 13, and the first flexible arm 121 bends towards the accommodating area 13 when in a natural state.

A stopper 122 is further disposed on a top end that is of the retaining plate 12 and that is away from the substrate 11.

When the splice protection sleeve 2 is installed in the accommodating area 13, the first flexible arm 121 is elastically deformed and secures the splice protection sleeve 2 in the accommodating area 13 under the action of an elastic force, and the stopper 122 is configured to restrict movement of the splice protection sleeve 2 in a direction away from the substrate 11.

In this implementation of this application, the first flexible arm 121 and the stopper 122 that can elastically press against the splice protection sleeve 2 are disposed on the retaining plate 12. When the splice protection sleeve 2 is installed in the accommodating area 13, the first flexible arm 121 is elastically deformed and secures the splice protection sleeve 2 in the accommodating area 13 under the action of the elastic force generated after elastic deformation of the first flexible arm 121. Then, the splice protection sleeve 2 can be firmly secured in the accommodating area 13. Therefore, the splice protection sleeve 2 does not move in the accommodating area 13. This avoids a risk that optical fibers in the splice protection sleeve 2 break due to movement of the splice protection sleeve 2. In this implementation of this application, the stopper 122 restricts movement of the splice protection sleeve 2 (to be specific, the stopper 122 restricts movement of the splice protection sleeve 2 in the direction away from the substrate 11), to effectively prevent the splice protection sleeve 2 from coming away from the splice holder 1.

In the implementations of this application, both a quantity of flexible arms disposed on the retaining plate 12 and positions of the flexible arms may be flexibly adjusted. This is not limited in the implementations of this application. For example, one or at least two first flexible arms 121 may be disposed on each retaining plate 12, and the first flexible arm 121 may be disposed on either end of the retaining plate 12. As shown in FIG. 3, one first flexible arm 121 is disposed on either end of each retaining plate 12. A distance between two first flexible arms 121 on two ends of the retaining plate 12 may be less than a length of the splice protection sleeve 2. For example, the distance between the two first flexible arms 121 on the two ends of the retaining plate 12 is 32 millimeters (millimeter, mm). Lengths of several common splice protection sleeves 2 are 40 mm, 45 mm, and 60 mm. In this case, the splice holder 1 in the implementations of this application is compatible with splice protection sleeves 2 of various lengths, and has high scalability.

In this application, as shown in FIG. 4, at least one second flexible arm 123 is further disposed on the at least one retaining plate 12 that forms the accommodating area 13. The second flexible arm 123 bends towards the accommodating area 13 when in a natural state, and there is a gap 14 between the second flexible arm 123 and the substrate 11. When the second flexible arm 123 is in the natural state, a bottom surface that is of the second flexible arm 123 and that faces the substrate 11 is configured to restrict movement of the splice protection sleeve 2 in the direction away from the substrate 11. For example, when fully loaded, one accommodating area 13 may accommodate two splice protection sleeves 2 that are sequentially arranged vertically. Alternatively, when not fully loaded, the accommodating area 13 may accommodate only one splice protection sleeve 2. In this case, the second flexible arm 123 is not elastically deformed, but is in the natural state, and the bottom surface of the second flexible arm 123 restricts upward movement of the splice protection sleeve 2. Meanwhile, the first flexible arm 121 exerts an elastic force on a side surface of the splice protection sleeve 2. The first flexible arm 121 and the second flexible arm 123 work together to secure the splice protection sleeve 2 in the accommodating area 13. It can be understood that, when fully loaded, one accommodating area 13 may alternatively accommodate three or more splice protection sleeves 2; when not fully loaded, the accommodating area may alternatively accommodate at least two splice protection sleeves 2 below the second flexible arm 123.

It can be understood that, when accommodating a maximum quantity of splice protection sleeves 2, the accommodating area 13 may be considered as fully loaded. When not accommodating a maximum quantity of splice protection sleeves 2, the accommodating area 13 may be considered as not fully loaded.

As shown in FIG. 4, the second flexible arm 123 is disposed between two first flexible arms 121 on the retaining plate 12. Therefore, the splice protection sleeve 2 can be secured more firmly, regardless of whether the accommodating area 13 is fully loaded or not fully loaded.

In some implementations, in a direction perpendicular to the substrate 11, a width of the gap 14 is greater than or equal to a diameter of the splice protection sleeve 2. Therefore, when a splice protection sleeve 2 is further installed in the accommodating area 13 after a splice protection sleeve 2 has been installed below the second flexible arm 123, no friction force is generated between the splice protection sleeve 2 that has been installed and the second flexible arm 123 during elastic deformation of the second flexible arm 123. This facilitates movement of the second flexible arm 123 during elastic deformation of the second flexible arm 123, and facilitates installation of the splice protection sleeve 2. A quantity of second flexible arms 123 and positions of the second flexible arms 123 are not limited in the implementations of this application. A quantity of second flexible arms 123 and positions of the second flexible arms 123 are not limited either in the implementations of this application, where there is a gap 14 between the second flexible arm 123 and the substrate 11.

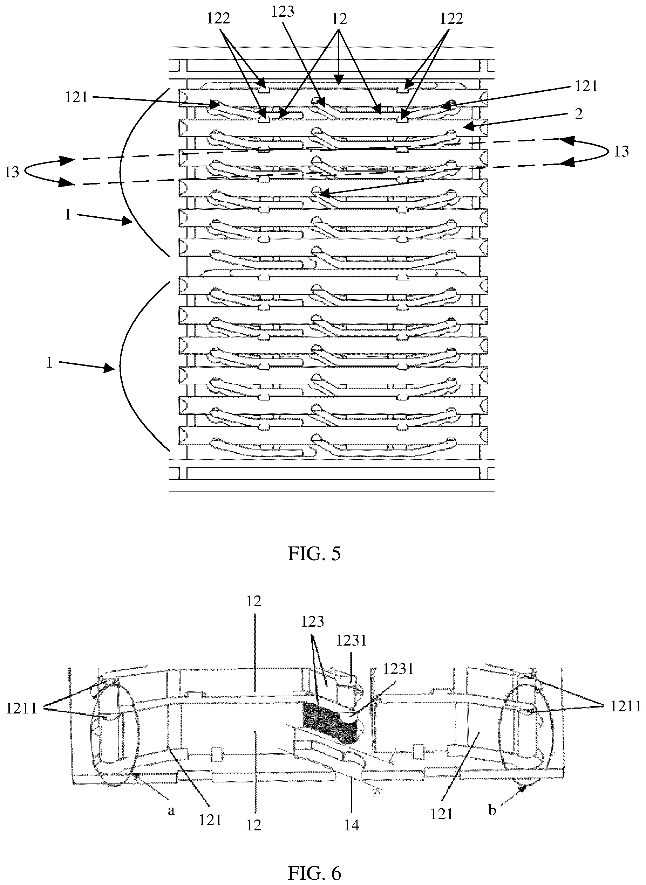

To facilitate understanding, the following provides a force analysis based on FIG. 5 and FIG. 6. As shown in FIG. 5, two splice holders 1 are included. Each splice holder 1 is provided with six accommodating areas 13. In a direction shown in FIG. 5, one of the splice holders 1 includes six accommodating areas 13 in total from top to bottom. An uppermost accommodating area 13 is formed by three retaining plates 12. In the accommodating area 13, there is one retaining plate 12 located above the accommodating area 13, and the retaining plate 12 is not provided with a flexible arm. Two retaining plates 12 are disposed below each accommodating area 13. A left retaining plate 12 is provided with one first flexible arm 121, and a right retaining plate 12 is provided with one first flexible arm 121 and one second flexible arm 123. Two adjacent accommodating areas 13 share two retaining plates 12. FIG. 5 is a schematic structural diagram of a splice holder 1 in which splice protection sleeves 2 are installed. FIG. 6 is a side sectional view of two retaining plates 12. For example, each accommodating area 13 can accommodate two splice protection sleeves 2 when fully loaded. In FIG. 6, a first flexible arm 121 is disposed in each of a position a and a position b on the splice holder 1, a second flexible arm 123 is further disposed on the retaining plate 12, and stoppers 122 are disposed in positions c on the splice holder 1. When two splice protection sleeves 2 are placed in an accommodating area 13 between the two retaining plates 12, the first flexible arm 121 is elastically deformed and secures the two splice protection sleeves 2 in the accommodating area 13 under the action of an elastic force generated after elastic deformation of the first flexible arm 121. Meanwhile, the second flexible arm 123 is elastically deformed and further secures an upper-layer splice protection sleeve 2 in the accommodating area 13. As shown in FIG. 6, in a height direction of the retaining plate 12, the stopper 122 restricts movement of the splice protection sleeve 2 in a direction away from the substrate 11, to prevent the splice protection sleeve 2 from coming away from the splice holder 1. In addition, in the height direction of the retaining plate 12, the upper-layer splice protection sleeve 2 in the retaining plate 12 presses a lower-layer splice protection sleeve 2, to prevent the lower-layer splice protection sleeve 2 in the retaining plate 12 from moving up and down. When only one layer of splice protection sleeve 2 is placed in the accommodating area 13, the second flexible arm 12 is not elastically deformed and is in a natural state. The layer of splice protection sleeve 2 may be clamped and secured by the first flexible arms 121 disposed in the positions a and b, and may be prevented by a bottom surface of the second flexible arm 123 from moving up and down.

In conclusion, the splice holder 1 in the implementations of this application can firmly secure both one layer of splice protection sleeve 2 and at least two layers of splice protection sleeves 2.

In an example, as shown in FIG. 6, in one accommodating area 13, a retaining plate 12 on which a first flexible arm 121 is disposed and a retaining plate 12 on which a stopper 122 is disposed are disposed opposite to each other. Therefore, the stopper 122 can better restrict movement of the splice protection sleeve 2.

In an example, a through hole is disposed in a position that is on the substrate 11 and that is right below the first flexible arm 121. A shape of the through hole may match a projection of the first flexible arm 121 on the substrate 11, or the through hole can accommodate a projection of the first flexible arm 121 on the substrate 11. This facilitates demolding of an injection-molded splice holder 1.

Optionally, in some implementations of this application, as shown in FIG. 4, two first flexible arms 121 are correspondingly disposed in one accommodating area 13, and in an extension direction of the splice protection sleeve 2, the second flexible arm 123 is disposed between the two first flexible arms 121.

In some implementations, the first flexible arm 121 and/or the second flexible arm 123 have/has a bending structure. Therefore, the splice protection sleeve 2 can be secured more firmly during subsequent installation. An elastic force can be increased. In addition, a part that is of the bending structure and that is configured to press against the splice protection sleeve 2 can be disposed as a structure that matches the splice protection sleeve 2, to better secure the splice protection sleeve 2.

Optionally, in some implementations of this application, one accommodating area 13 is configured to secure at least two splice protection sleeves 2, and the at least two splice protection sleeves 2 are sequentially arranged vertically in the direction perpendicular to the substrate 11.

When the at least two splice protection sleeves 2 are installed in the accommodating area 13, the second flexible arm 123 secures the splice protection sleeve 2 in the accommodating area 13 through elastic deformation. When at least two layers of splice protection sleeves 2 are installed in the accommodating area 13, the first flexible arm 121 on the retaining plate 12 restricts the at least two splice protection sleeves 2 to the accommodating area 13 through elastic deformation. Therefore, the installed at least two layers of splice protection sleeves 2 are secured, and are prevented from breaking.

In the side sectional view of the two retaining plates 12 shown in FIG. 6, an area represented by a reference numeral 14 in FIG. 6 is the gap 14.

Optionally, in some implementations of this application, a bottom surface that is of the stopper 122 and that faces the substrate 11 presses against the splice protection sleeve 2, to restrict movement of the splice protection sleeve 2 in a direction away from the substrate 11.

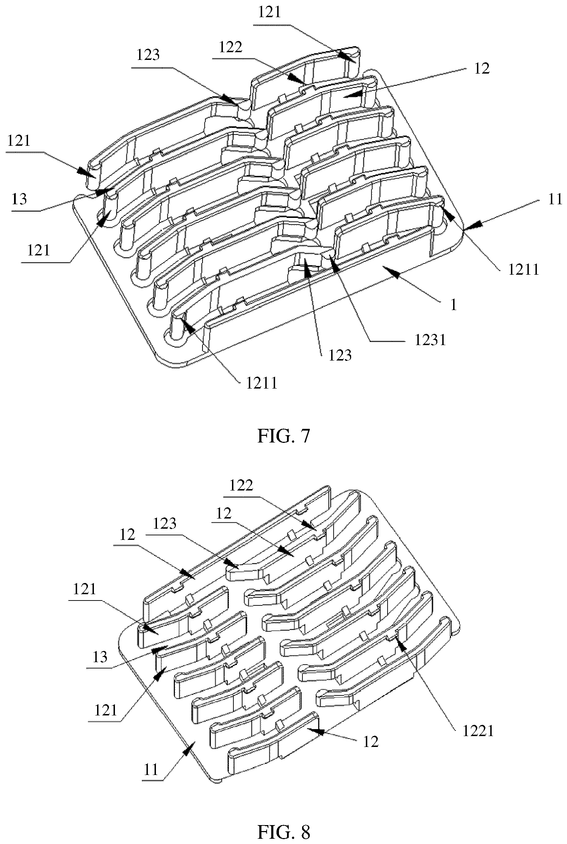

Optionally, in some implementations of this application, as shown in FIG. 7, a first guide surface 1211 is disposed on the first flexible arm 121, and the first guide surface 1211 is configured to guide the splice protection sleeve 2 to be installed in the accommodating area 13. The first guide surface 1211 may be flat or curved. The first guide surface 1211 is disposed, to facilitate placement, removal, and replacement of the splice protection sleeve 2. If at least two first flexible arms 121 are disposed on the retaining plates 12, a first guide surface 1211 may be disposed on at least one of the first flexible arms 121. A quantity of first guide surfaces 1211 and a position of the first guide surface 1211 are not limited in the implementations of this application.

Optionally, in some implementations of this application, as shown in FIG. 6, a second guide surface 1231 is disposed on the second flexible arm 123, and the second guide surface 1231 is configured to guide the splice protection sleeve 2 to be installed in the accommodating area 13. The second guide surface 1231 is disposed, to facilitate placement, removal, and replacement of the splice protection sleeve 2.

Optionally, in some implementations of this application, as shown in FIG. 8, a third guide surface 1221 is disposed on the stopper 122, and the third guide surface 1221 is configured to guide the splice protection sleeve 2 to be installed in the accommodating area 13.

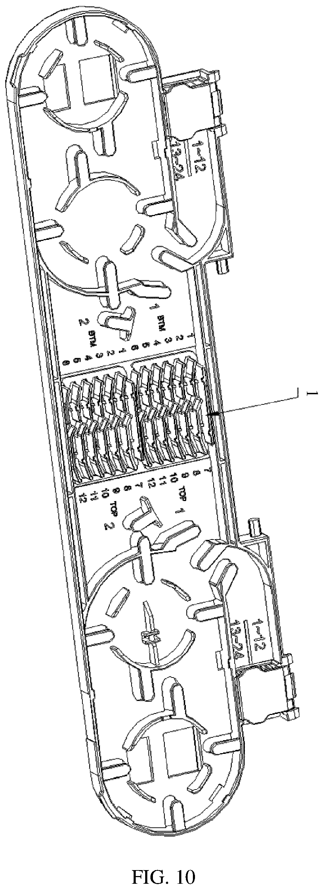

The foregoing describes the splice holder 1 in the implementations of this application, technical features such as the retaining plate 12, the accommodating area 13, the first flexible arm 121, the second flexible arm 123, the stopper 122, the first guide surface 1211, the second guide surface 1231, and the third guide surface 1221 in the splice holder 1 are also applicable to the splice tray in the implementations of this application. An implementation of this application further provides a splice tray. As shown in FIG. 10, the splice tray includes the splice holder 1 in any one of FIG. 2 to FIG. 5 and FIG. 7 to FIG. 9. For details, refer to the descriptions of the splice holder 1. Details are not described herein.

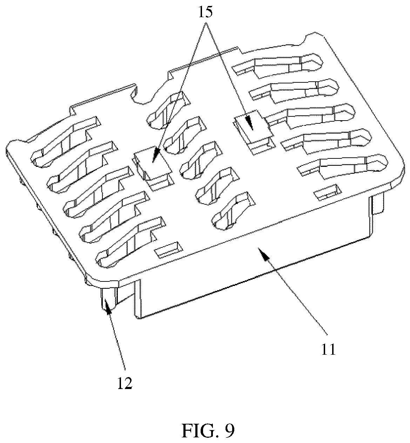

In some implementations, as shown in FIG. 9, at least one wedge structure 15 is disposed on one side that is of a housing of the substrate 11 and that faces the first flexible arm 121. The splice holder 1 and the splice tray are detachably connected with the at least one wedge structure 15. FIG. 10 is a schematic diagram of a splice tray in which a splice holder 1 is installed according to an implementation of this application.

In the foregoing implementations, the descriptions of the implementations have respective focuses. For a part that is not described in detail in an implementation, refer to related descriptions in other implementations.

It may be clearly understood by a person skilled in the art that, for the purpose of convenient and brief description, for a detailed structure of the foregoing splice tray, refer to a corresponding description in the implementations of the splice holder 1, and details are not described herein.

The scope of protection is defined by the appended claims.

## Claims

1. A splice holder (1), comprising a substrate (11) and at least two retaining plates (12) disposed on the substrate, wherein there are at least two retaining plates disposed opposite to each other in the at least two retaining plates, to form at least one accommodating area (13) configured to accommodate a first splice protection sleeve (2);
for any accommodating area, at least one first flexible arm (121) is disposed on a first one of the at least two retaining plates that form the accommodating area, and the at least one first flexible arm bends towards the at least one accommodating area when in a natural state;
a stopper (122) is further disposed on a top end of a second one of the at least two retaining plates that form the at least one accommodating area, the second retaining plate being opposite to the first retaining plate, and wherein the top end is away from the substrate; and when the first splice protection sleeve is installed in the at least one accommodating area, the at least one first flexible arm is elastically deformed and secures the first splice protection sleeve in the at least one accommodating area under the action of an elastic force, and the stopper is configured to restrict movement of the first splice protection sleeve in a direction away from the substrate;
wherein at least one second flexible arm (123) is further disposed on the first retaining plate, the at least one second flexible arm bends towards the at least one accommodating area when in a natural state, there is a gap (14) between the at least one second flexible arm and the substrate, and when the at least one second flexible arm is in the natural state, a bottom surface that is of the at least one second flexible arm and that faces the substrate is configured to restrict movement of the first splice protection sleeve in a direction away from the substrate;
wherein one accommodating area of the least one accommodating area is further configured to secure at least one second splice protection sleeve, and the first and at least one second splice protection sleeves are sequentially arranged vertically in the direction perpendicular to the substrate, the at least one second splice protection sleeve being atop the first splice protection sleeve; and
when the first and at least one second splice protection sleeves are installed in the one accommodating area of the at least one accommodating area, the at least one first flexible arm secures each of the splice protection sleeves in the one accommodating area of the at least one accommodating area through elastic deformation, and the at least one second flexible arm (123) secures the at least one second splice protection sleeve in the one accommodating area of the at least one accommodating area through elastic deformation.

2. The splice holder according to claim 1, wherein in a direction perpendicular to the substrate, a width of the gap is greater than or equal to a diameter of the first splice protection sleeve

3. The splice holder according to claim 1 or 2, wherein two first flexible arms are correspondingly disposed on the first retaining plate, and in an extension direction of the first and at least one second splice protection sleeves, the at least one second flexible arm is disposed between the two first flexible arms.

4. The splice holder according to claim 3, wherein the first flexible arms restrict the first and at least one second splice protection sleeves to the one accommodating area of the at least one accommodating area through elastic deformation

5. The splice holder according to claim 3 or 4, wherein a bottom surface that is of the stopper and that faces the substrate presses against the at least one second splice protection sleeve, to restrict movement of the first and at least one second splice protection sleeves in a direction away from the substrate.

6. The splice holder according to any one of claims 1 to 5, wherein a first guide surface is disposed on each first flexible arm, and the first guide surface is configured to guide the first and at least one second splice protection sleeves to be installed in the one accommodating area of the at least one accommodating area

7. The splice holder according to any one of claims 1 to 6, wherein a second guide surface is disposed on the at least one second flexible arm, and the second guide surface is configured to guide the first and at least one second splice protection sleeves to be installed in the one accommodating area of the at least one accommodating area

8. The splice holder according to any one of claims 1 to 7, wherein a third guide surface is disposed on the stopper, and the third guide surface is configured to guide the at least one second splice protection sleeve to be installed in the one accommodating area of the at least one accommodating area.

9. The splice holder according to any one of claims 1 to 8, wherein the first flexible arm and/or the at least one second flexible arm have/has a bending structure.

10. A splice tray, wherein the splice tray comprises the splice holder according to any one of claims 1 to 9.

## Patentansprüche

1. Spleißhalter (1), umfassend ein Substrat (11) und mindestens zwei auf dem Substrat angeordnete Halteplatten (12), wobei mindestens zwei Halteplatten, die einander gegenüberliegend angeordnet sind, in den mindestens zwei Halteplatten vorhanden sind, um mindestens einen Aufnahmebereich (13) zu bilden, der dazu konfiguriert ist, eine erste Spleißschutzhülse (2) aufzunehmen;
für jeden Aufnahmebereich mindestens ein erster flexibler Arm (121) an einer ersten der mindestens zwei Halteplatten angeordnet ist, die den Aufnahmebereich bilden, und der mindestens eine erste flexible Arm sich in Richtung des mindestens einen Aufnahmebereichs biegt, wenn er sich in einem natürlichen Zustand befindet;
ein Stopper (122) ferner an einem oberen Ende einer zweiten der mindestens zwei Halteplatten angeordnet ist, die den mindestens einen Aufnahmebereich bilden, wobei die zweite Halteplatte der ersten Halteplatte gegenüberliegt und wobei das obere Ende von dem Substrat entfernt ist; und wenn die erste Spleißschutzhülse in dem mindestens einen Aufnahmebereich installiert ist, der mindestens eine erste flexible Arm elastisch verformt ist und die erste Spleißschutzhülse in dem mindestens einen Aufnahmebereich unter der Wirkung einer elastischen Kraft befestigt, und der Stopper dazu konfiguriert ist, eine Bewegung der ersten Spleißschutzhülse in einer von dem Substrat wegführenden Richtung zu beschränken;
wobei mindestens ein zweiter flexibler Arm (123) ferner an der ersten Halteplatte angeordnet ist, sich der mindestens eine zweite flexible Arm in Richtung des mindestens einen Aufnahmebereichs biegt, wenn er sich in einem natürlichen Zustand befindet, ein Spalt (14) zwischen dem mindestens einem zweiten flexiblen Arm und dem Substrat vorhanden ist, und wenn sich der mindestens eine zweite flexible Arm in dem natürlichen Zustand befindet, eine Bodenfläche, die zu dem mindestens einen zweiten flexiblen Arm gehört und dem Substrat zugewandt ist, dazu konfiguriert ist, eine Bewegung der ersten Spleißschutzhülse in einer von dem Substrat wegführenden Richtung zu beschränken;
wobei ein Aufnahmebereich des mindestens einen Aufnahmebereichs ferner dazu konfiguriert ist, mindestens eine zweite Spleißschutzhülse zu befestigen, und die erste und mindestens eine zweite Spleißschutzhülse aufeinanderfolgend vertikal in der Richtung senkrecht zu dem Substrat angeordnet sind, wobei die mindestens eine zweite Spleißschutzhülse auf der ersten Spleißschutzhülse liegt; und
wenn die erste und mindestens eine zweite Spleißschutzhülse in dem einen Aufnahmebereich des mindestens einen Aufnahmebereichs installiert sind, der mindestens eine erste flexible Arm jede der Spleißschutzhülsen durch elastische Verformung in dem einen Aufnahmebereich des mindestens einen Aufnahmebereichs befestigt, und der mindestens eine zweite flexible Arm (123) die mindestens eine zweite Spleißschutzhülse durch elastische Verformung in dem einen Aufnahmebereich des mindestens einen Aufnahmebereichs befestigt.

2. Spleißhalter nach Anspruch 1, wobei in einer Richtung senkrecht zu dem Substrat eine Breite des Spalts größer als ein Durchmesser der ersten Spleißschutzhülse oder gleich diesem ist.

3. Spleißhalter nach Anspruch 1 oder 2, wobei zwei erste flexible Arme entsprechend an der ersten Halteplatte angeordnet sind und der mindestens eine zweite flexible Arm in einer Erstreckungsrichtung der ersten und mindestens einen zweiten Spleißschutzhülse zwischen den zwei ersten flexiblen Armen angeordnet ist.

4. Spleißhalter nach Anspruch 3, wobei die ersten flexiblen Arme die erste und mindestens eine zweite Spleißschutzhülse durch elastische Verformung auf den einen Aufnahmebereich des mindestens einen Aufnahmebereichs beschränken.

5. Spleißhalter nach Anspruch 3 oder 4, wobei eine Bodenfläche, die zu dem Stopper gehört und dem Substrat zugewandte ist, gegen die mindestens eine zweite Spleißschutzhülse drückt, um eine Bewegung der ersten und mindestens einen zweiten Spleißschutzhülse in einer von dem Substrat wegführenden Richtung zu beschränken.

6. Spleißhalter nach einem der Ansprüche 1 bis 5, wobei eine erste Führungsfläche an jedem ersten flexiblen Arm angeordnet ist und die erste Führungsfläche dazu konfiguriert ist, die erste und mindestens eine zweite Spleißschutzhülse zu führen, um in dem einen Aufnahmebereich des mindestens einen Aufnahmebereichs installiert zu werden.

7. Spleißhalter nach einem der Ansprüche 1 bis 6, wobei eine zweite Führungsfläche an dem mindestens einen zweiten flexiblen Arm angeordnet ist und die zweite Führungsfläche dazu konfiguriert ist, die erste und mindestens eine zweite Spleißschutzhülse zu führen, um in dem einen Aufnahmebereich des mindestens einen Aufnahmebereichs installiert zu werden.

8. Spleißhalter nach einem der Ansprüche 1 bis 7, wobei eine dritte Führungsfläche an dem Stopper angeordnet ist und die dritte Führungsfläche dazu konfiguriert ist, die mindestens eine zweite Spleißschutzhülse zu führen, um in dem einen Aufnahmebereich des mindestens einen Aufnahmebereichs installiert zu werden.

9. Spleißhalter nach einem der Ansprüche 1 bis 8, wobei der erste flexible Arm und/oder der mindestens eine zweite flexible Arm eine Biegestruktur aufweist/aufweisen.

10. Spleißablage, wobei die Spleißablage den Spleißhalter nach einem der Ansprüche 1 bis 9 umfasst.

## Revendications

1. Dispositif de retenue pour épissure soudée (1), comprenant un substrat (11) et au moins deux plaques de retenue (12) disposées sur le substrat, dans lequel il y a au moins deux plaques de retenue disposées l'une en face de l'autre dans les au moins deux plaques de retenue, pour former au moins une zone de réception (13) configurée pour recevoir un premier manchon de protection d'épissure (2) ;
pour toute zone de réception, au moins un premier bras flexible (121) est disposé sur une première des au moins deux plaques de retenue qui forment la zone de réception, et l'au moins un premier bras flexible se plie vers l'au moins une zone de réception lorsqu'il est à l'état naturel ;
une butée (122) est en outre disposée sur une extrémité supérieure d'une seconde des au moins deux plaques de retenue qui forment l'au moins une zone de réception, la seconde plaque de retenue étant opposée à la première plaque de retenue, et dans lequel l'extrémité supérieure est éloignée du substrat ; et lorsque le premier manchon de protection d'épissure est installé dans l'au moins une zone de réception, l'au moins un premier bras flexible est déformé élastiquement et fixe le premier manchon de protection d'épissure dans l'au moins une zone de réception sous l'action d'une force élastique, et la butée est configurée pour restreindre le mouvement du premier manchon de protection d'épissure dans une direction s'éloignant du substrat ;
dans lequel au moins un second bras flexible (123) est en outre disposé sur la première plaque de retenue, l'au moins un second bras flexible se plie vers l'au moins une zone de réception lorsqu'il est dans un état naturel, il y a un espace (14) entre l'au moins un second bras flexible et le substrat, et lorsque l'au moins un second bras flexible est à l'état naturel, une surface inférieure qui est de l'au moins un second bras flexible et qui fait face au substrat est configurée pour restreindre le mouvement du premier manchon de protection d'épissure dans une direction opposée au substrat ; dans lequel une zone de réception de l'au moins une zone de réception est en outre configurée pour fixer au moins un second manchon de protection d'épissure, et le premier et au moins un second manchons de protection d'épissure sont disposés séquentiellement verticalement dans la direction perpendiculaire au substrat, l'au moins un second manchon de protection d'épissure étant au-dessus du premier manchon de protection d'épissure ; et
lorsque le premier et au moins un second manchons de protection d'épissure sont installés dans l'une zone de réception de l'au moins une zone de réception, l'au moins un premier bras flexible fixe chacun des manchons de protection d'épissure dans l'une zone de réception de l'au moins une zone de réception par déformation élastique, et l'au moins un second bras flexible (123) fixe l'au moins un second manchon de protection d'épissure dans l'une zone de réception de l'au moins une zone de réception par déformation élastique.

2. Dispositif de retenue pour épissure soudée selon la revendication 1, dans lequel dans une direction perpendiculaire au substrat, une largeur de l'espace est supérieure ou égale à un diamètre du premier manchon de protection d'épissure.

3. Dispositif de retenue pour épissure soudée selon la revendication 1 ou 2, dans lequel deux premiers bras flexibles sont disposés de manière correspondante sur la première plaque de retenue, et dans une direction d'extension du premier et d'au moins un second manchons de protection d'épissure, l'au moins un second bras flexible est disposé entre les deux premiers bras flexibles.

4. Dispositif de retenue pour épissure soudée selon la revendication 3, dans lequel les premiers bras flexibles limitent le premier et au moins un second manchons de protection d'épissure à la zone de réception de l'au moins une zone de réception par déformation élastique.

5. Dispositif de retenue pour épissure soudée selon la revendication 3 ou 4, dans lequel une surface inférieure qui est celle de la butée et qui fait face au substrat appuie contre l'au moins un second manchon de protection d'épissure, pour limiter le mouvement du premier et d'au moins un second manchons de protection d'épissure dans une direction opposée au substrat.

6. Dispositif de retenue pour épissure soudée selon l'une quelconque des revendications 1 à 5, dans lequel une première surface de guidage est disposée sur chaque premier bras flexible, et la première surface de guidage est configurée pour guider le premier et au moins un second manchons de protection d'épissure à installer dans l'une zone de réception de l'au moins une zone de réception.

7. Dispositif de retenue pour épissure soudée selon l'une quelconque des revendications 1 à 6, dans lequel une deuxième surface de guidage est disposée sur l'au moins un second bras flexible, et la deuxième surface de guidage est configurée pour guider le premier et au moins un second manchons de protection d'épissure à installer dans l'une zone de réception de l'au moins une zone de réception.

8. Dispositif de retenue pour épissure soudée selon l'une quelconque des revendications 1 à 7, dans lequel une troisième surface de guidage est disposée sur la butée, et la troisième surface de guidage est configurée pour guider l'au moins un second manchon de protection d'épissure à installer dans l'une zone de réception de l'au moins une zone de réception.

9. Dispositif de retenue pour épissure soudée selon l'une quelconque des revendications 1 à 8, dans lequel le premier bras flexible et/ou l'au moins un second bras flexible présente(nt) une structure de flexion.

10. Cassette comprenant l'épissure, dans laquelle la cassette comprenant l'épissure comprend le dispositif de retenue pour épissure soudée selon l'une quelconque des revendications 1 à 9.
